# EUROPEAN PATENT SPECIFICATION

(11) **EP 2 874 850 B1**
(45) Date of publication and mention of the grant of the patent: **22.05.2019**
(21) Application number: 13750910.5
(22) Date of filing: 19.07.2013
(51) Int. Cl.: B60P 3/34

(54) **FOLDING CAMPER**
FALTBARER WOHNWAGEN
TENTE-CARAVANE

(30) Priority: 20.07.2012 GB 201212955
(43) Date of publication of application: 27.05.2015
(73) Proprietor: Purple Line Limited, Ipswich, Suffolk IP9 2BB (GB)
(72) Inventor: HARRISON, Jonathan M, Ipswich Suffolk IP9 2BB (GB); BARROW, Stuart, Ipswich Suffolk IP9 2BB (GB); SCHOFIELD, Jonathan, Ipswich Suffolk IP9 2BB (GB)
(74) Representative: Dummett Copp LLP
(86) International application number: PCT/GB2013/051948
(87) International publication number: WO 2014/013273

(56) References cited:
- WO-A1-2007/042042
- AU-B2- 609 328
- GB-A- 1 596 101
- GB-A- 2 084 943
- US-A- 3 445 134
- US-A- 3 753 590
- US-A1- 2006 043 768

## Description

### FIELD OF THE INVENTION

The present invention relates to a folding camper and to a method of erecting a folding camper.

### BACKGROUND TO THE INVENTION

Folding campers provide an alternative to caravans and tents. Folding campers generally comprise a trailer containing a tent canopy which is erected over the trailer to provide an accommodation space.

Folding campers thereby provide an alternative to caravans and also provide many advantages over caravans. For example, when a folding camper is folded down, the trailer is significantly more compact than a caravan. A folding camper is, therefore, easier to store and is generally easier and safer to tow. Furthermore, a folding camper is significantly lighter than a caravan and is easier to manoeuvre. However, a folding camper is still able to provide a generally spacious accommodation area compared to a trailer tent.

Folding campers are also cheaper than caravans, camper vans and motor homes. Folding campers provide a camping experience but also provide sufficient storage space for fitted fridges, toilets, ovens etc. Accordingly, folding campers provide the equipment and accommodation level similar to a caravan/motor home whilst benefiting from a relatively compact storage and towing size.

However, unlike a caravan/motor home, a folding camper must be assembled once located at the pitch. This may involve quite complicated steps including the insertion of poles for the tent canopy and/or the insertion of side panels to from the sides of the accommodation space. This can leave the interior open to the elements during the assembly and, subsequently, the fixtures and fitting may get wet and/or damaged during the assembly of the accommodation space. Furthermore, folding campers generally require a lot of effort in the assembly and this can deter users from using folding campers. Accordingly, the assembly and disassembly of a folding camper can be a time consuming and difficult task which may require more than one person and may also leave the interior temporarily exposed to the elements which can cause any internal (electrical) equipment to be damaged.

Document US 3 753 590 discloses a folding camper according to the preamble of claim 1 and a method of assembling a folding camper according to the preamble of claim 15.

It is an aim of the present invention to overcome at least one problem associated with the prior art whether referred to herein or otherwise.

### SUMMARY OF THE INVENTION

According to a first aspect of the present invention there is provided a folding camper comprising:
a wheeled rigid trailer comprising a box having a longitudinal length extending from a first end to a second end;
the wheeled rigid trailer comprising a rigid cover;
a canopy secured to a framework for supporting the canopy in an assembled configuration;
wherein the framework comprises a first frame and a second frame and the rigid cover comprises a first cover section and a second cover section and both cover sections are pivotally connected to the trailer;
wherein the first frame is pivotally connected to the box and the pivotal opening of the first cover section causes the first frame to rotate from a storage position to an assembled position;
wherein the second frame is pivotally connected to the box and the pivotal opening of the second cover section causes the second frame to rotate from a storage position to an assembled position;
wherein the first frame is adjustable in height and is arranged to be retracted for a stored configuration and extended for an assembled configuration; and
wherein the canopy is secured around a periphery to securement means provided by the first cover section, the second cover section and the box and in which the canopy remains attached to the securement means as the first frame and the second frame rotate from the storage positions to the assembled positions.

Preferably in the assembled configuration, the height of the first frame is greater than half the longitudinal length of the box and preferably the height of the second frame is greater that half the longitudinal length of the box.

Preferably, in the assembled configuration, the combined height of the first frame plus the height of the second frame is greater than the length of the box.

Preferably the canopy is secured around substantially a full lower periphery to the first cover section, the second cover section and the box and in which substantially the full lower periphery of the canopy remains attached to the securement means as the first frame and the second frame rotate from the storage positions to the assembled positions.

Preferably the securement means is provided along both lateral sides of the box. The securement means may be provided adjacent to or towards the upper lateral edges of the box. The securement means may provide non-secured section, for example to provide door spaces/openings.

The securement means may be provided along both lateral sides of the first cover section and a front edge of the first cover section.

The securement means may be provided along both lateral sides of the second cover section and a rear edge of the second cover section.

The securement means may comprise canopy rail securement or a caravan awning rail securement. The securement means may comprise an elongate channel provided on the box and/or the first cover section and/or the second cover section into which a corresponding elongate member (tube/rod) can be slidably engaged and retained therein. Preferably the elongate members comprise flexible rods which are retained around the lower periphery of the canopy. Preferably each securement edge of the box and/or the first cover section and/or the second cover section comprises an elongate securement channel.

Preferably the height of the second frame is non-adjustable. The height of the second frame is maintained the same in the stored position and in the assembled position.

Preferably the height of the second frame is non-adjustable.

Preferably the second frame is arranged to be pivoted from the stored position to the assembled position whilst the second frame is in an assembled configuration.

Preferably the first frame is arranged to be pivoted from the stored position to the assembled position whilst the first frame is a retracted and unassembled configuration. The first frame may be arranged to be extended to the assembled configuration only once the first frame is in the assembled position.

Preferably the first frame comprises a plurality (preferably three) of first frame members or first poles.

The first poles may be fixedly secured to the box.

Preferably the first poles are permanently secured to the box.

Preferably the first poles extend from a first lateral side of the box to a second lateral side of the box.

Preferably the first poles extend from a first front securement member to a second front securement member. Preferably the front securement members comprise securement brackets. The box may comprise a first front securement bracket mounted on a first lateral side and a second front securement bracket mounted on a second lateral side. The front securement brackets may be mounted towards or adjacent to a front end of the box. The front securement brackets may be mounted towards or adjacent to a top edge of the box. The first front securement bracket may be mounted towards or adjacent to a first front corner of the box and the second front securement bracket may be mounted towards or adjacent to a second front corner of the box.

The first frame comprises a plurality of first hooped poles, wherein the first hooped poles are arranged to rotate about an axis substantially coincidental with an axis of rotation of the first cover section.

Preferably the first frame comprises at least one arcuate or curved first pole and more preferably comprises a plurality of arcuate or curved first poles.

Preferably at least one and more preferably all of the first frame members of the first frame are extendable. Preferably at least one and more preferably all of the first frame members of the first frame are telescopic. The or each telescopic first frame member may comprise a telescopic section located on a first lateral extent of the first frame member and a second lateral extent of the first frame member. Accordingly, the or each first frame member in the first frame may comprise two telescopic sections.

Preferably the first frame is a front frame and the second frame may be a rear frame.

Preferably the second frame comprises a plurality (preferably three) of second frame members or second poles.

The second poles may be fixedly secured to the box.

Preferably the second poles are permanently secured to the box.

Preferably the second poles extend from a first lateral side of the box to a second lateral side of the box.

Preferably the second poles extend from a first rear securement member to a second rear securement member. Preferably the rear securement members comprise securement brackets. The box may comprise a first rear securement bracket mounted on a first lateral side and a second rear securement bracket mounted on a second lateral side. The rear securement brackets may be mounted towards or adjacent to a rear end of the box. The rear securement brackets may be mounted towards or adjacent to a top edge of the box. The first rear securement bracket may be mounted towards or adjacent to a first rear corner of the box and the second rear securement bracket may be mounted towards or adjacent to a second rear corner of the box.

The second frame comprises a plurality of second hooped poles, wherein the second hooped poles are arranged to rotate about an axis substantially coincidental with an axis of rotation of the second cover section.

Preferably the second frame comprises at least one arcuate or curved pole and more preferably comprises a plurality of arcuate or curved poles.

Preferably at least one and more preferably all of the frame members of the second (or rear) frame are non-extendable. Preferably at least one and more preferably all of the frame members of the second frame have a fixed height/length.

Preferably the canopy is secured to each frame member (pole).

Preferably the canopy is secured around a peripheral edge to the box and more preferably is secured at or towards an upper edge of the box.

Preferably the canopy is secured to the first cover section. Preferably the canopy is secured to two opposing lateral edges of the first cover section and a front edge of the first cover section. A rear edge of the first cover section may comprise a linear hinge which pivotally mounts the first cover section to the box. Preferably the canopy is secured to the first cover section throughout the assembly process. Preferably the canopy is secured to the first cover section as the first cover section is pivotally moved between the stored configuration and the assembled configuration.

Preferably the canopy is secured to the second cover section. Preferably the canopy is secured to two opposing lateral edges of the second cover section and a rear edge of the second cover section. A front edge of the second cover section may comprise a linear hinge which pivotally mounts the second cover section to the box. Preferably the canopy is secured to the second cover section throughout the assembly process. Preferably the canopy is secured to the second cover section as the second cover section is pivotally moved between the stored configuration and the assembled configuration.

Preferably the positioning of the framework in the assembled configuration causes the canopy to be in tension and preferably taut within the framework.

Preferably the movement of the first cover section from the stored configuration to the assembled configuration pulls the canopy which causes the first frame to pivotally move to the assembled configuration. Preferably once the first frame is in the assembled configuration, the movement of the second cover section from the stored configuration to the assembled configuration pulls the canopy which causes the second frame to pivotally move to the assembled configuration. Preferably once the first frame and the second frame are both in the assembled configuration, the first frame is extended to the final assembled configuration.

Preferably in the stored configuration, the second cover section is prevented or at least inhibited from being opened to the assembled configuration and this may be due to the first frame and the associated canopy being located on the second frame and the associated canopy.

Preferably in the stored configuration, the first frame and the associated canopy is located on the second frame and the associated canopy

Preferably the framework and the canopy is arranged to shelter an interior of the folding camper during the assembly process.

Preferably the framework and the canopy is arranged to cover the interior of the folding camper as the first frame and the second frame are moved to the assembled configuration.

Preferably, in the assembled configuration, the canopy extends between adjacent frame members of the first and second frames and the adjacent edges of the box and/or the adjacent edges of the cover sections.

According to a second aspect of the present invention there is provided a method of assembling a folding camper, the folding camper comprising:
a wheeled rigid trailer comprising a box having a longitudinal length extending from a first end to a second end;
the wheeled rigid trailer comprising a rigid cover;
a canopy secured to a framework for supporting the canopy in an assembled configuration;
wherein the framework comprises a first frame and a second frame and the rigid cover comprises a first cover section and a second cover section and both cover sections are pivotally connected to the trailer;
the method comprising:
   pivotally opening the first cover section to cause the first frame to rotate from a storage position to an assembled position;
   pivotally opening the second cover section to cause the second frame to rotate from a storage position to an assembled position; and
   extending the height of the first frame in the assembled position.

Preferably the method comprises keeping the interior of the folding camper covered during the assembly process.

Preferably the method comprises keeping the interior of the folding camper covered during the storage process.

Preferably the method comprises maintaining the first frame secured to the box as the first frame pivots from the stored position to the assembled position.

Preferably the method comprises maintaining the second frame secured to the box as the second frame pivots from the stored position to the assembled position.

Preferably the method comprises maintaining the canopy secured to the first frame, the second frame, the box and the cover sections as the folding camper is configured between a stored configuration and an assembled configuration.

Preferably the method comprises maintaining the canopy secured to the first frame, the second frame, the box and the cover sections as the folding camper is configured between an assembled configuration and a stored configuration.

### BRIEF DESCRIPTION OF THE DRAWINGS

The present invention will now be described, by way of example only, with reference to the drawings that follow, in which:
Figure 1 is a side view of a preferred embodiment of a folding camper in an assembled configuration;
Figure 2 is a perspective view of a preferred embodiment of a folding camper in an assembled configuration;
Figure 3 is a side view of a preferred embodiment of a folding camper with a first frame in an erect configuration and a second frame in a configuration between a stored configuration and an erect configuration.
Figure 4 is a perspective view of a preferred embodiment of a folding camper with a first frame in an erect configuration and a second frame in a configuration between a stored configuration and an erect configuration with the canopy omitted for clarity.
Figure 5 is a side view of a preferred embodiment of a folding camper with a first frame in an erect configuration and a second frame in a stored configuration.
Figure 6 is a perspective view of a preferred embodiment of a folding camper with a first frame in an erect configuration and a second frame in a stored configuration with the canopy omitted for clarity.
Figure 7 is a side view of a preferred embodiment of a folding camper with a first frame in a configuration between a stored configuration and an erect configuration and a second frame in a stored configuration.
Figure 8 is a perspective view of a preferred a preferred embodiment of a folding camper with a first frame in a configuration between a stored configuration and an erect configuration and a second frame in a stored configuration with the canopy omitted for clarity.
Figure 9 is a side view of a preferred embodiment of a folding camper in a stored configuration.
Figure 10 is a perspective view of a preferred embodiment of a folding camper in a stored configuration.

### DESCRIPTION OF THE PREFERRED EMBODIMENTS

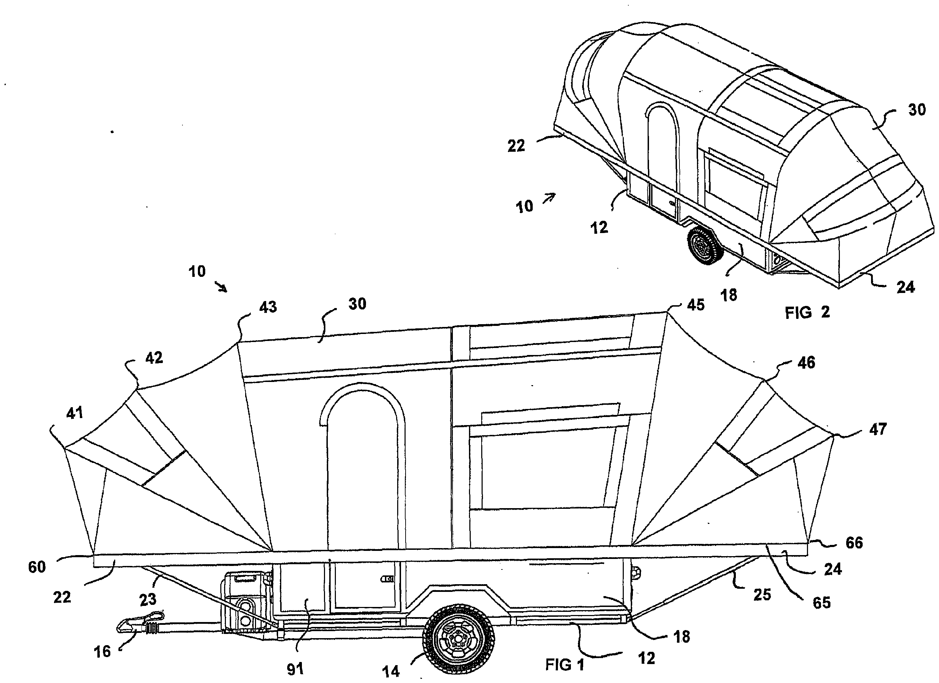

As shown in Figure 1, Figure 2, Figure 9 and Figure 10, a folding camper 10 comprises a trailer 12 mounted on wheels 14 and includes a tow bar coupling (tow hitch) 16 in order to secure the folding camper to a towing vehicle (not shown). The trailer 12 comprises a rigid box 18 with four rigid side walls 90, 91, 92, 93.

The trailer 12 also comprises a rigid cover comprising a first section 22 and a second section 24. The first section 22 comprises a rigid front section 22 or panel. The rigid front section 22 is pivotally connected along one edge (a front edge) to a wall of the box 18 of the trailer 12. Similarly, the second section 24 comprises a rigid rear section 24 or panel. The rigid rear section 24 is pivotally connected along one edge (a rear edge) to a wall of the box 18 of the trailer 12.

In particular, the rigid front section 22 comprises a front bed tray which is arranged to extend out from the box 18 in the assembled configuration (shown in figure 1 and Figure 2) in order to provide a solid raised sleeping area or another accommodation area. Similarly, the rigid second section 24 comprises a rear bed tray which is arranged to extend out from the box 18 in the assembled configuration in order to provide a solid raised sleeping area or another accommodation area.

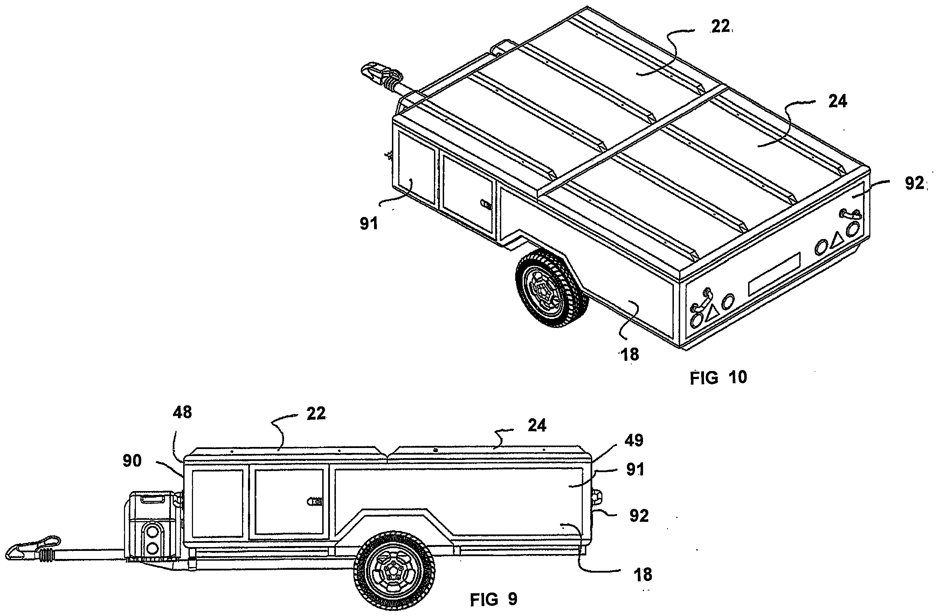

In the stored configuration (shown in Figure 9 and Figure 10), the front cover section 22 and the rear cover section are in a closed position and close an internal space of the box 18. The box 18 thereby securely contains the interior components of the folding camper 10 within an entirely rigid container.

A front top edge of the box 18 comprises a linear hinge 48 which pivotally connects an edge of the front cover section 22. The linear hinge 48 extends along the full length of the connecting edge of the front cover section 22. Accordingly, from the stored configuration, the front cover section 22 can be pivoted over the front edge of the box 18 in order to move from a position in which the front cover section 22 closes the box 18 to a position in which the front cover section 22 extends substantially horizontally outwards from the front edge of the box 18. The folding camper 10 may include reinforcement means in order to retain the front cover section 22 in this (assembled) raised horizontal position. As shown in Figure 1, the reinforcement means comprises a front support arm 23 which extends upwardly at an angle from a lower position on the box 18 to the underside of the front cover section 22. The front support arm 23 provides a reinforcement strut. In the preferred embodiment the bed tray provides a double bed sized sleeping area.

The rear cover section 24 is provided in the same way as the front cover section. A front rear edge of the box 18 comprises a linear hinge 49 which pivotally connects an edge of the rear cover section 24. The linear hinge 49 extends along the full length of the connecting edge of the rear cover section 24. Accordingly, from the stored configuration, the rear cover section 24 can be pivoted over the rear edge of the box 18 in order to move from a position in which the rear cover section 24 closes the box 18 to a position in which the rear cover section 24 extends substantially horizontally outwards from the rear edge of the box 18. The folding camper 10 may include reinforcement means in order to retain the rear cover section 24 in this (assembled) raised horizontal position. The reinforcement means comprises a rear support arm 25 which extends upwardly at an angle from a lower position on the box 18 to the underside of the rear cover section 24. The rear support arm 25 provides a reinforcement strut. In the preferred embodiment the bed tray provides a double bed sized sleeping area. Accordingly, the folding camper 10 provides two equally sized double bed sleeping area at the longitudinal ends of the folding camper 10.

Alternative embodiments of the present invention may have unequally sized bed trays/sleeping areas and the associated cover section may be of unequal sizes.

As shown in Figure 1 and Figure 2, the folding camper 10 comprises a canopy 30 which effectively provides a tent canopy 30 for the folding camper. The folding camper 10 also comprises a framework 32 to maintain the tent canopy 30 in a raised configuration in order to provide an accommodation space within the folding camper 10 in the assembled configuration.

The framework 32 includes a front frame 34 and a rear frame 36. The front frame 34 is arranged to raise and maintain the front part of the tent canopy 30 in a raised and elevated position whilst the rear frame 36 is arranged to raise and maintain the rear part of the tent canopy 30 in an elevated and raised position. A central part of the tent canopy 30 is arranged to span between the front frame 34 and the rear frame 36 to provide the central accommodation area.

The front frame 34 comprises a plurality of poles 40 and, in the preferred embodiment, the front frame comprises three poles 41, 42, 43. The three poles include a front pole 41, an intermediate pole 42 and a rear pole 43. Each of the poles 41, 42, 43 comprises a curved or hooped pole which comprises a resilient material.

The poles 40 of the front frame 34 are all connected or attached to the tent canopy 30 and the poles 40 may be substantially integral with the tent canopy 30. The poles 40 are arranged, in the assembled configuration, to be spaced apart with a section of the tent canopy 30 extending between adjacent poles 40. Accordingly in the assembled configuration, the frame 40 maintains the tent canopy in a raised position over the front cover section 22. This may provide a first sleeping area.

Similarly, the rear frame 36 comprises a plurality of poles 44 and, in the preferred embodiment, the rear frame 36 comprises three poles 45, 46, 47. The three poles 45, 46, 47 include a front pole 45, an intermediate pole 46 and a rear pole 47. Each of the poles 45, 46, 47 comprises a curved or hooped pole which comprises a resilient material.

The poles 44 of the front frame are all connected or attached to the tent canopy 30 and the poles 44 may be substantially integral with the tent canopy 30. The poles 44 are arranged, in the assembled configuration, to be spaced apart with a section of the tent canopy 30 extending between adjacent poles 44. Accordingly in the assembled configuration, the frame 44 maintains the tent canopy in a raised position over the rear cover section 24. This may provide a second sleeping area.

A middle section of the tent canopy 30 extends between the rear pole 43 of the front frame 40 and the front pole 45 of the rear frame 44. This middle section of the tent canopy 30 may provide two opposing side walls and a ceiling for the accommodation area of the folding camper. These wall sections may include window areas and a door(s).

The securement of the frames 34, 36 to the tent canopy 30 is designed to provide an intrinsic tension in the tent canopy 30 such that the material of the tent canopy 30 is held in a naturally taut state as the cover sections 22, 24 are placed in the extended raised bed position.

The canopy 30 is secured around substantially a full lower periphery to the first cover section 22, the second cover section 24 and the box 18 and in which substantially the full lower periphery of the canopy 30 remains attached to securement means as the first frame 34 and the second frame 36 rotate from the storage positions to the assembled positions.

The securement means is provided along both lateral sides 91, 93 of the box 18. The securement means is provided adjacent to or towards the upper lateral edges of the box 18. The securement means provides a non-secured section, for example to provide a door space/opening.

The securement means is provided along both lateral sides 61, 63 of the first cover section 22 and the front edge 60 of the first cover section 22. Similarly, the securement means is provided along both lateral sides 65 of the second cover section 24 and a rear edge 66 of the second cover section 24.

The securement means may comprise canopy rail securement or a caravan awning rail securement system. The securement means provides an elongate channel (rail) provided on the box 18, the first cover section 22 and the second cover section 24 into which a corresponding elongate member (tube/rod) can be slidably engaged and retained therein. In particular, the lower peripheral edge of the tent canopy 30 includes a flexible rod which is attached at the lower extent. For example, the flexible rod may be provided in a hem of the canopy. Each securement edge of the box 18, the first cover section 22 and the second cover section 24 comprise an elongate securement channel/rail. The securement system thereby effectively seals the complete interior of the folding camper 10 during assembly, packing and in the assembled state. Prior art systems may not secure the canopy during assembly to the box 18 and/or the cover section 22, 24 and this causes the interior of the folding camper to be exposed to be at least partially the elements. In prior art systems, the effective sealing of the interior of the folding camper may only be achieved once the folding camper is in the assembled configuration.

The poles 41, 42, 43 of the front frame 34 extend from a first securement member 50 mounted on a first lateral side 91 of the box 18 to a second securement member mounted 52 on a second opposite lateral side 93 of the box 18. Each pole 41, 42, 43 has two respective longitudinal ends which are permanently fixed to the respective securement members 50, 52. In particular, unlike prior art campers, the poles 41, 42, 43 are not secured to the box 18 only after the cover section has been placed in the assembled configuration. In the present invention, the poles 41, 42, 43 are mounted to the securement members 50, 52 and pivot whilst being maintained in this secured state. Accordingly, at all times in the assembly process, in the stored configuration and in the assembled configuration, the poles 41, 42, 43 are kept secured to the securement members 50, 52.

The securement members 50, 52 comprise brackets mounted adjacent to the front corners of the box 18 and also adjacent to the top edge of the box 18.

The longitudinal ends of the poles 41, 42, 43 are pivotally connected to the securement brackets 50, 52 such that the poles 41, 42, 43 are rotatable around an axis defined between the opposing securement brackets 50, 52. In particular, the axis of rotation for all of the poles 41, 42, 43 extends across the width of the box 18 at a position parallel with a front top edge of the box 18. Accordingly, the poles 41, 42, 43 are designed to rotate about an axis substantially coincidental with the axis of rotation of the front cover section 22.

The tent canopy 30 is secured at a front edge to an edge 60 of the front cover section 22 which is opposite the hinged edge 62 of the front cover section 22. The tent canopy 30 is also secured to the side edges 61, 63 of the front cover section 22. Accordingly, as the front cover section 22 is pivoted over the front edge of the box, this movement causes the tent canopy 30 to pull the poles 40 and to pivot the poles in the securement brackets 50, 52.

The poles 41, 42, 43 may be telescopic or otherwise extendable and adjustable. During assembly, the poles 41, 42, 43 may be initially pivoted into position and then the telescopic poles 41, 42, 43 may be extended to fully elevate and raise the tent canopy 30 and to place the tent canopy 30 under the desired tension such that the tent canopy 30 provides taut sides and a taut ceiling section around the front accommodation area.

The use of poles 41, 42, 43 that are adjustable in height enables the folding camper 10 to provide an increased accommodation area whilst still enabling the folding camper 10 to be assembled and collapsed into a relatively compact box 18. In particular, the final dimension of the heights/lengths of the poles 41, 42, 43 is greater than half the longitudinal length of the box 18. This is achieved by providing one set of adjustable poles 41, 42, 43 which are located on top of the other set of poles 45, 46, 47 in the collapsed/stored configuration. For example, the length of all the poles 41, 42, 43, 45, 46, 47 in the erect/assembled configuration may be 75% of the full length of the box or 150% of the length of the respective cover section.

More particularly, the combined height of the front frame 34 and the rear frame 36 is greater than the longitudinal length of the box 18. As it will be appreciated, in prior art assemblies without a height adjustable frame, it would not be possible to maintain the frames permanently secured to the box in the stored and assembled configurations since the simple folding of the ends would result in one frame overlying the cover section of the other end.

It will be appreciated that the poles 41, 42, 43, 45, 46, 47 in a frame 40, 44 may have differing lengths and the intermediate pole 42, 46 may be shorter than the front pole 41, 45 and/or the rear pole 43, 47. The problem of being able to easily fold the poles back into the box arises when the longest pole of the front frame plus the longest pole of the rear frame is greater than the length of the box. This can be overcome by (at least partially) detaching the relevant pole(s) which are too long from the respective mounting(s) to enable the poles to be folded into the box.

It can be seen that it would be impossible to simply rotate both the front frame 40 and the rear frame 44 in order for all of the tent poles 41, 42, 43, 45, 46, 47 to be contained underneath the cover sections 22, 24 and for the poles 41, 42, 43, 45, 46, 47 and the tent canopy 30 to be packed into the box 18. Accordingly, the preset invention provides adjustable poles 41, 42, 43 (in at least one frame 34) which enables the accommodation area to be maximised and to also provide a simple and easy packaging method whilst maintaining all the interior accommodation area in a covered and sheltered state at all times during the assembly and packaging.

The rear frame 44 with the non-extendable long poles 45, 46, 47 is packaged first with the poles 45, 46, 47 in the front frame 34 being shortened and then packaged on top of the first frame 40. Conversely, for assembly, the cover section 22 with the adjustable poles 41, 42, 43 is rotated first followed by the rotation and assembly of the second cover section 24 with the non-extendable poles 45, 46, 47.

The poles 45, 46, 47 of the rear frame 36 extend from a first securement member 54 mounted on a first lateral side 91 of the box 18 to a second securement member mounted (not shown) on a second opposite lateral side 93 of the box 18. Each pole 45, 46, 47 has two respective longitudinal ends which are permanently fixed to the respective securement members 54. As previously mentioned, unlike prior art campers, the poles 45, 46, 47 are not secured to the box 18 only after the cover section has been placed in the assembled configuration. In the present invention, the poles 45, 46, 47 are mounted to the securement members 54 and pivot whilst being maintained in this secured state. Accordingly, at all times in the assembly process and in the stored configuration and in the assembled configuration, the poles 45, 46, 47 are kept secured to the securement members 54.

The securement members 54 comprise brackets mounted adjacent to the rear corners of the box 18 and also adjacent to the top edge of the box 18.

The longitudinal ends of the poles 45, 46, 47 are pivotally connected to the securement brackets 54 such that the poles 45, 46, 47 are rotatable around an axis defined between the opposing securement brackets 54. In particular, the axis of rotation for all of the poles 45, 46, 47 extends across the width of the box 18 at a position parallel with a rear top edge of the box 18. Accordingly, the poles 45, 46, 47 are designed to rotate about an axis substantially coincidental with the axis of rotation of the rear cover section 24.

The tent canopy 30 is secured at a rear edge to an edge 66 of the rear cover section 24 which is opposite the hinged edge 64 of the rear cover section 24. The tent canopy 30 is also secured to the side edges 65 of the rear cover section 24. Accordingly, as the rear cover section 24 is pivoted over the rear edge of the box 18, this movement causes the tent canopy 30 to pull the poles 44 and to pivot the poles 44 in the securement brackets 54.

The poles 45, 46, 47 are non-extendable. During assembly, the poles 45, 46, 47 are simply pivoted into position and this action extends and fully elevates and raises the tent canopy 30. This action, together with the already complete assembly of the front frame 34, places the tent canopy 30 under the desired tension such that the tent canopy 30 provides taut sides and a taut ceiling section around the central and rear accommodation areas.

Overall, in comparison to prior art arrangements, one half portion of the tent does not need further adjustment and is pivoted out fully assembled, whilst the other half portion needs further adjustment (i.e. extending) once this half portion has been pivoted.

The operation of the folding camper 10 comprising the assembly and the subsequent packing of the folding camper 10 will now be described with reference to Figures 1 to 10. It can be seen the numerical sequence of the Figures shows the packaging sequence whereas the reverse numerical sequence demonstrates the assembly sequence. Accordingly the packaging operation will initially be described.

In the fully assembled and erect configuration, as shown in Figure 1 and Figure 2, the tent canopy 30 provides a spacious accommodation area with the lengths of the poles and the height of the tent canopy 30 being greater than 50% of the length of the box 18 of the trailer. As previously explained, this is achieved through the use of one frame 40 having poles 41, 42, 43 of adjustable height. The poles 41, 42, 43 are in an extended state for the assembled position and in an unextended (or retracted) state for packaging and storing.

The folding camper 10 in the assembled configuration provides a front accommodation area, a middle accommodation area and a rear accommodation area.

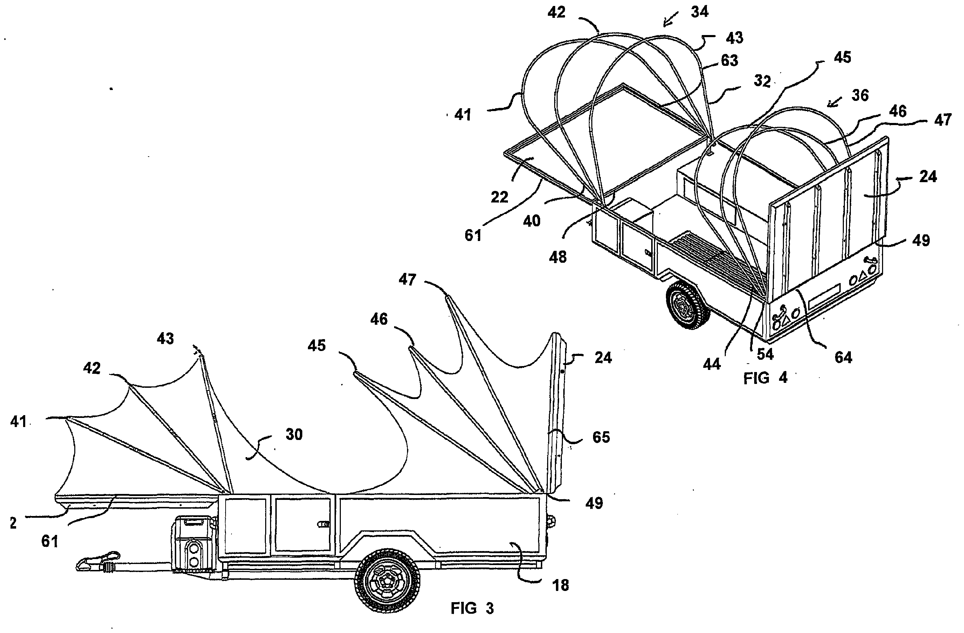

As shown in Figure 3 and Figure 4, to commence the packing and storing sequence, initially the extendable poles 41, 42, 43 are retracted and the front part of the tent canopy 30 is lowered and the tension in the tent canopy 30 is reduced.

The rear frame 44 and the rear cover section 24 are rotated about the securement brackets and the linear hinge respectively. This movement automatically compacts the tent canopy 30 with the central part of the tent canopy 30 locating in the middle of the box 18.

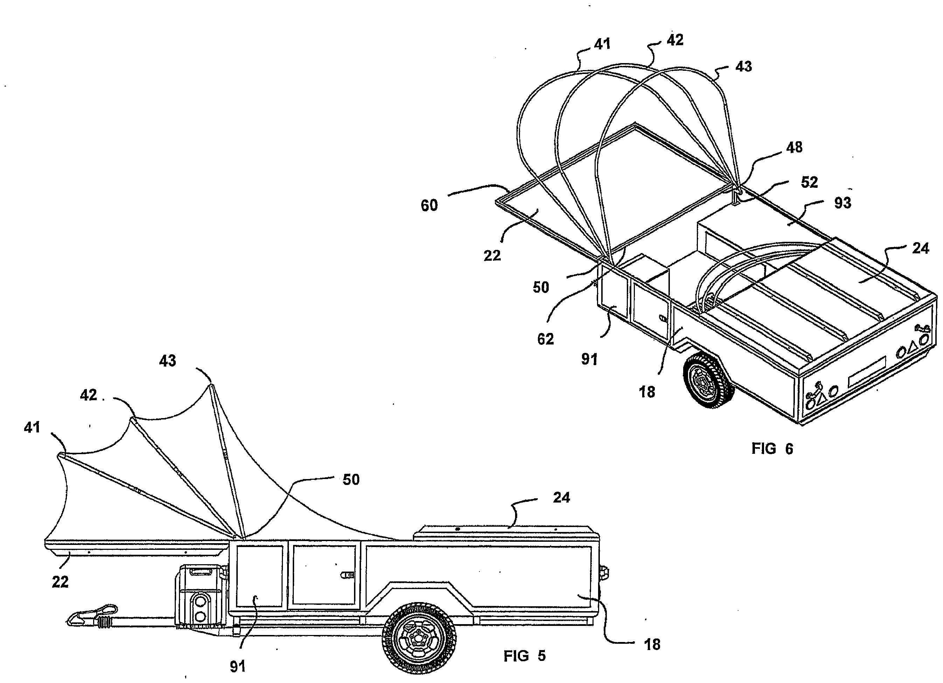

The movement pf the rear cover section 24 is continued about the linear hinge until the rear cover section locates over the rear half of the top of the box 18 with the rear portion of the tent canopy 30 and the rear frame 44 located and contained within the box 18, as shown in Figure 5 and Figure 6.

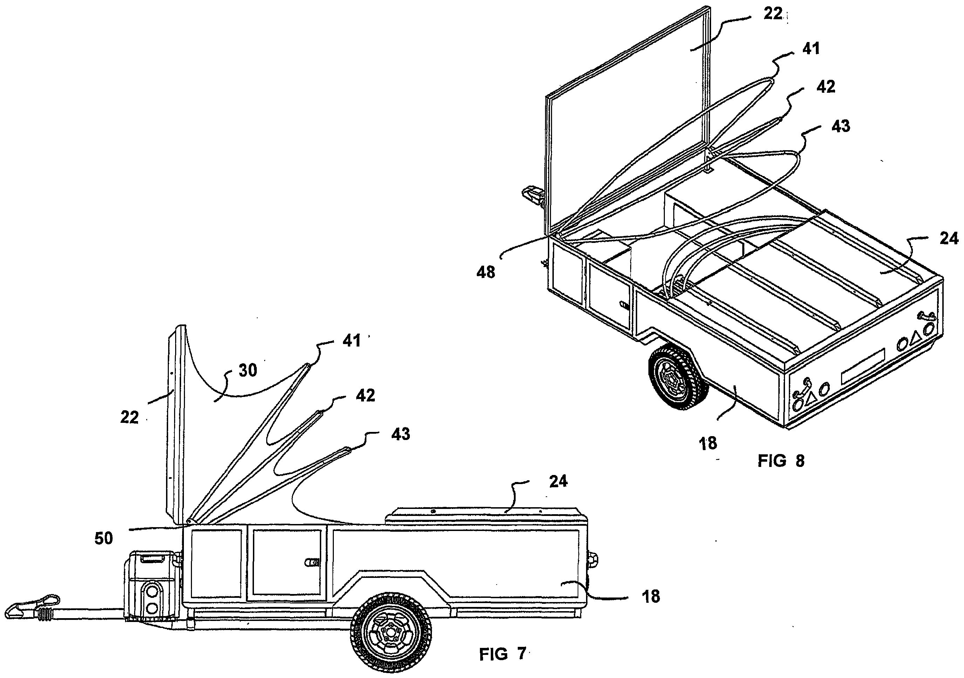

As shown in Figure 7 and Figure 8, the front cover section 22 can then be rotated about the respective linear hinge and this subsequently moves the retracted poles 41, 42, 43 about the respective securement brackets. This movement effectively concertinas the tent canopy 30 for this front section.

The rotational movement of the front cover section 22 is continued until the front cover section 22 completes the cover for the box 18 together with the rear cover section 24, as shown in Figure 9 and Figure 10. In this stored configuration, the front frame 40 lies partially on top of the rear frame 44.

In order to unpack and assemble the folding camper the reverse of the packing sequence is performed.

First, the front cover section 22 is pivoted out to provide the front accommodation base. The rear cover section 24 is then rotated out to provide the rear accommodation base. Finally, the adjustable poles 41, 42, 43 are extended to provide the full height accommodation area with the tent canopy 30 being held in a taut state. This assembly sequence is performed and maintains the interior of the folding camper in a covered state at all times.

One advantage of the present invention is that the tent section of the folding camper 10 is attached to the top of the box section of the trailer part at all times. As a result of this permanent fixture, it means that when the trailer is opened out (by opening up the two lids that form the end beds) the tent opens out at the same time. This arrangement this makes erection very quick and means that the interior of the camper 10 is always under cover. For example, when arriving at a campsite, the trailer can be opened up with minimal effort and time so that the kids can be inside the camper and not get bored and/or wet.

The present invention uses three hoop poles at one end which are height adjustable so that they can be collapsed down (reduced in height) sufficiently so that they are less than half the length of the trailer body. This means one end can be opened/closed and allows the other end to open up freely.

In addition, the large curvature of the hoop poles in the present invention is a very distinct feature compared to existing folding campers currently on the market that utilise straight poles with very angular tent construction.

The assembly/erection process (and subsequently the closure) could be done utilizing motors by remote control (or part of).

Overall the present invention provides a folding camper 10 is arranged to be assembled by first pivoting the front cover section 22 which pulls the canopy 30 and rotates a front frame 34. The rear cover section 24 is then pivotally opened which pulls the canopy 30 and rotates a second frame 36. Finally, the height of the first frame is increased in order to put the canopy 30 in tension and to make the canopy 30 taut. The present invention uses two permanently mounted frames 34, 36 which pivotally move into position and maintain the interior of the folding camper 10 in a sheltered state. Since at least one of the frames 34, 36 is extendable in height, this enables the final assembled height of the accommodation area to be maximised in relation to the storage length for the frames 34, 36 provided by the box 18.

In comparison to prior art arrangements, one half portion of the tent does not need further adjustment by pivoting out fully assembled, as opposed to the other half portion which needs further adjustment.

## Claims

1. A folding camper (10) comprising:
a wheeled rigid trailer (12) comprising a box (18) having a longitudinal length extending from a first end to a second end;
the wheeled rigid trailer (12) comprising a rigid cover;
a canopy (30) secured to a framework (32) for supporting the canopy (30) in an assembled configuration;
wherein the framework (32) comprises a first frame (34) and a second frame (36) and the rigid cover comprises a first cover section (22) and a second cover (24) section and both cover sections (22, 24) are pivotally connected to the trailer (12);
wherein the first frame (34) is pivotally connected to the box (18) and the pivotal opening of the first cover section (22) causes the first frame (34) to rotate from a storage position to an assembled position;
wherein the second frame (36) is pivotally connected to the box (18) and the pivotal opening of the second cover section (24) causes the second frame (36) to rotate from a storage position to an assembled position;
wherein the first frame (34) is adjustable in height and is arranged to be retracted for a stored configuration and extended for an assembled configuration; and
wherein the canopy (30) is secured around a periphery to securement means provided by the first cover section (22), the second cover section (24) and the box (18) and in which the canopy (30) remains attached to the securement means as the first frame (34) and the second frame (36) rotate from the storage positions to the assembled positions;
**characterised in that**
the first frame (34) comprises a plurality of first hooped poles (41, 42, 43), wherein the first hooped poles (41, 42, 43) are arranged to rotate about an axis substantially coincidental with an axis of rotation of the first cover section (22); and
the second frame (36) comprises a plurality of second hooped poles (45, 46, 47), wherein the second hooped poles (45, 46, 47) are arranged to rotate about an axis substantially coincidental with an axis of rotation of the second cover section (24).

2. A folding camper (10) according to Claim 1 in which, in the assembled configuration, the height of the first frame (34) is greater than half the longitudinal length of the box (18) and in which, in the assembled configuration, the height of the second frame (36) is greater than half the longitudinal length of the box (18).

3. A folding camper (10) according to any preceding claim in which, in the assembled configuration, the combined height of the first frame (34) plus the height of the second frame (36) is greater than the length of the box (18).

4. A folding camper (10) according to any preceding claim in which the canopy (30) is secured around substantially a full lower periphery to the first cover section (22), the second cover section (24) and the box (18) and in which substantially the full lower periphery of the canopy (30) remains attached to the securement means as the first frame (34) and the second frame (36) rotate from the storage positions to the assembled positions.

5. A folding camper (10) according to any preceding claim in which the securement means comprises a canopy rail securement system comprising an elongate channel (rail) provided on the box (18) and the first cover section (22) and the second cover section (24) into which corresponding elongate members are slidably engaged and retained therein.

6. A folding camper (10) according to Claim 5 in which the elongate members comprise flexible rods which are retained around the lower periphery of the canopy (30).

7. A folding camper (10) according to any preceding claim in which the height of the second frame (36) is non-adjustable.

8. A folding camper (10) according to any preceding claim in which the first frame (34) comprises the plurality of first poles (41, 42, 43) which are permanently secured to the box (18) and the first poles (41, 42, 43) extend from a first lateral side of the box (18) to a second lateral side of the box (18), and in which the first poles (41, 42, 43) extend from a first front securement member (50) to a second front securement member (52) and in which the front securement members (50, 52) comprise securement brackets with a first front securement bracket mounted on a first lateral side and a second front securement bracket mounted on a second lateral side, and in which the front securement brackets are mounted adjacent to a front end of the box (18) and adjacent to a top edge of the box (18) and in which the first front securement bracket is mounted adjacent to a first front corner of the box (18) and the second front securement bracket is mounted adjacent to a second front corner of the box (18).

9. A folding camper (10) according to any preceding claim in which all of the first frame members (41, 42, 43) of the first frame (34) are telescopic.

10. A folding camper (10) according to any preceding claim in which the second frame (36) comprises a plurality of second poles (45, 46, 47) which are permanently secured to the box (18) and the second poles (45, 46, 47) extend from a first lateral side of the box (18) to a second lateral side of the box (18), and in which the second poles (45, 46, 47) extend from a first rear securement member (54) to a second rear securement member and in which the rear securement members (54) comprise securement brackets with a first rear securement bracket (54) mounted on a first lateral side and a second rear securement bracket mounted on a second lateral side, and in which the rear securement brackets are mounted adjacent to a rear end of the box (18) and adjacent to a top edge of the box (18) and in which the first rear securement bracket is mounted adjacent to a first rear corner of the box (18) and the second rear securement bracket is mounted adjacent to a second rear corner of the box (18).

11. A folding camper (10) according to any preceding claim in which all of the frame members (45, 46, 47) of the second frame (36) are non-extendable.

12. A folding camper (10) according to any preceding claim wherein the movement of the first cover section (22) from the stored configuration to the assembled configuration pulls the canopy (30) which causes the first frame (34) to pivotally move to the assembled configuration and wherein once the first frame (34) is in the assembled configuration, the movement of the second cover section (36) from the stored configuration to the assembled configuration pulls the canopy (30) which causes the second frame (36) to pivotally move to the assembled configuration, and wherein once the first frame (34) and the second frame (36) are both in the assembled configuration, the first frame (34) is extended to the final assembled configuration and in which the positioning of the framework (32) in the assembled configuration causes the canopy (30) to be in tension and taut within the framework (32) and for the canopy (30) to span between the first frame (34) and the second frame (36) and wherein the tension provides a taut ceiling section around a central accommodation area.

13. A folding camper (10) according to any preceding claim in which, in the stored configuration, the second cover section (24) is prevented from being opened to the assembled configuration as a result of the first frame (34) and the associated canopy (30) being located on the second (36) frame and the associated canopy (30).

14. A folding camper (10) according to any preceding claim in which, in the assembled configuration, the canopy (30) extends between adjacent frame members (41, 42, 43, 45, 46, 47) of the first and second frames (34, 36) and the adjacent edges of the box (18) and the adjacent edges of the cover sections (22, 24).

15. A method of assembling a folding camper (10), the folding camper (10) comprising:
a wheeled rigid trailer (12) comprising a box (18) having a longitudinal length extending from a first end to a second end;
the wheeled rigid trailer (12) comprising a rigid cover;
a canopy (30) secured to a framework (32) for supporting the canopy (30) in an assembled configuration;
wherein the framework (32) comprises a first frame (34) and a second frame (36) and the rigid cover comprises a first cover section (22) and a second cover section (24) and both cover sections (22, 24) are pivotally connected to the trailer (12);
the method comprising:
pivotally opening the first cover section (22) to cause the first frame (34) to rotate from a storage position to an assembled position;
pivotally opening the second cover section (24) to cause the second frame (36) to rotate from a storage position to an assembled position;
extending the height of the first frame (34) in the assembled position; and
securing the canopy (30) around a periphery to securement means provided by the first cover section (22), the second cover section (24) and the box (18) and maintaining the securement of the canopy (30) to the securement means as the first frame (34) and the second frame (36) rotate from the storage positions to the assembled positions;
**characterised in that**
the first frame (34) comprises a plurality of first hooped poles (41, 42, 43), wherein the first hooped poles (41, 42, 43) are arranged to rotate about an axis substantially coincidental with an axis of rotation of the first cover section (22); and
the second frame (36) comprises a plurality of second hooped poles (45, 46, 47), wherein the second hooped poles (45, 46, 47) are arranged to rotate about an axis substantially coincidental with an axis of rotation of the second cover section (24).

## Patentansprüche

1. Faltbarer Wohnwagen (10), umfassend:
einen starren Anhänger mit Rädern (12), umfassend einen Kasten (18) mit einer Längserstreckung, die sich von einem ersten Ende zu einem zweiten Ende hin erstreckt;
wobei der starre Anhänger mit Rädern (12) eine starre Abdeckung umfasst;
eine Kabine (30), die an einer Tragstruktur (32) zur Abstützung der Kabine (30) in einer zusammengebauten Konfiguration befestigt ist;
wobei die Tragstruktur (32) einen ersten Rahmen (34) und einen zweiten Rahmen (36) umfasst und die starre Abdeckung einen ersten Abdeckungsabschnitt (22) und einen zweiten Abdeckungsabschnitt (24) umfasst und beide Abdeckungsabschnitte (22, 24) schwenkbar mit dem Anhän-ger (12) verbunden sind;
wobei der erste Rahmen (34) schwenkbar mit dem Kasten (18) verbunden ist und wobei das Öffnen durch Schwenken des ersten Abdeckungsabschnitts (22) bewirkt, dass der erste Rahmen (34) aus einer Verstauposition in eine Aufbauposition rotiert;
wobei der zweite Rahmen (36) schwenkbar mit dem Kasten (18) verbunden ist und wobei das Öffnen durch Schwenken des zweiten Abdeckungsabschnitts (24) bewirkt, dass der zweite Rahmen (36) aus einer Verstauposition in die Aufbauposition rotiert;
wobei der erste Rahmen (34) in der Höhe einstellbar und so angeordnet ist, dass er zur Einstellung einer Verstaukonfiguration zurückgezogen und zur Einstellung einer Aufbaukonfiguration ausgezogen werden kann; und
wobei die Kabine (30) um einen Rand herum an Sicherungsmitteln befestigt ist, welche durch den ersten Abdeckungsabschnitt (22), den zweiten Abdeckungsabschnitt (24) und den Kasten (18) bereitgestellt werden und in welchen die Kabine (30) an den Sicherungsmitteln befestigt bleibt, während der erste Rahmen (34) und der zweite Rahmen (36) aus den Verstaupositionen in die Aufbaupositionen rotieren;
**dadurch gekennzeichnet,**
**dass** der erste Rahmen (34) eine Mehrzahl erster gebogener Stangen (41, 42, 43) umfasst, wobei die ersten gebogenen Stangen (41, 42, 43) so angeordnet sind, dass sie um eine Achse rotieren können, die im Wesentlichen mit der Drehachse des ersten Abdeckungsabschnitts (22) zusammenfällt; und
der zweite Rahmen (36) eine Mehrzahl zweiter gebogener Stangen (45, 46, 47) umfasst, wobei die zweiten gebogenen Stangen (45, 46, 47) so angeordnet sind, dass sie um eine Achse rotieren können, die im Wesentlichen mit der Drehachse des zweiten Abdeckungsabschnitts (24) zusammenfällt.

2. Faltbarer Wohnwagen (10) nach Anspruch 1,
bei welchem in der Aufbaukonfiguration die Höhe des ersten Rahmens (34) größer ist als die Hälfte der Längserstreckung des Kastens (18), und bei welchem in der Aufbaukonfiguration die Höhe des zweiten Rahmens (36) größer ist als die Hälfte der Längserstreckung des Kastens (18).

3. Faltbarer Wohnwagen (10) nach einem der vorigen Ansprüche,
bei welchem in der Aufbaukonfiguration die kombinierte Höhe des ersten Rahmens (34) plus die Höhe des zweiten Rahmens (36) größer ist, als die Länge des Kastens (18) .

4. Faltbarer Wohnwagen (10) nach einem der vorigen Ansprüche,
bei welchem die Kabine (30) um im Wesentlichen den gesamten unteren Rand des ersten Abdeckungsabschnitts (22), des zweiten Abdeckungsabschnitts (24) und des Kastens (18) herum befestigt ist, und bei welchem im Wesentlichen der gesamte untere Rand der Kabine (30) an den Sicherungsmitteln angebracht bleibt, während der erste Rahmen (34) und der zweite Rahmen (36) aus den Verstaupositionen in die Aufbaupositionen rotieren.

5. Faltbarer Wohnwagen (10) nach einem der vorigen Ansprüche,
bei welchem die Sicherungsmittel ein Kabinenschienensicherungssystem umfassen, welches einen länglichen Kanal (Schiene) umfasst, welcher am Kasten (18), am ersten Abdeckungsabschnitt (22) und am zweiten Abdeckungsabschnitt (24) vorgesehen ist, in welche entsprechende längliche Elemente verschiebbar in Eingriff gebracht und darin gehalten werden.

6. Faltbarer Wohnwagen (10) nach Anspruch 5,
bei welchem die länglichen Elemente flexible Stangen umfassen, welche um den unteren Rand der Kabine (30) herum gehalten werden.

7. Faltbarer Wohnwagen (10) nach einem der vorigen Ansprüche,
bei welchem die Höhe des zweiten Rahmens (36) nicht einstellbar ist.

8. Faltbarer Wohnwagen (10) nach einem der vorigen Ansprüche,
bei welchem der erste Rahmen (34) eine Mehrzahl erste Stangen (41, 42, 43) umfasst, welche permanent am Kasten (18) befestigt sind, und wobei die ersten Stangen (41, 42, 43) sich von einer ersten Längsseite des Kastens (18) zu einer zweiten Längsseite des Kastens (18) erstrecken, und bei welchem die ersten Stangen (41, 42, 43) sich von einem ersten vorderen Sicherungselement (50) zu einem zweiten vorderen Sicherungselement (52) erstrecken, und wobei die vorderen Sicherungselemente (50, 52) Sicherungsklammern umfassen, wobei eine erste vordere Sicherungsklammer auf einer ersten Längsseite und eine zweite vordere Sicherungsklammer auf einer zweiten Längsseite montiert ist, und bei welchem die vorderen Sicherungsklammern benachbart zu einem vorderen Ende des Kastens (18) und benachbart zu einem oberen Rand des Kastens (18) montiert sind und wobei die erste vordere Sicherungsklammer benachbart zu einer ersten vorderen Ecke des Kastens (18) und die zweite vordere Sicherungsklammer benachbart zu einer zweiten vorderen Ecke des Kastens (18) montiert ist.

9. Faltbarer Wohnwagen (10) nach einem der vorigen Ansprüche,
bei welchem alle ersten Rahmenelemente (41, 42, 43) des ersten Rahmens (34) teleskopisch ausgebildet sind.

10. Faltbarer Wohnwagen (10) nach einem der vorigen Ansprüche,
bei welchem der zweite Rahmen (36) eine Mehrzahl zweite Stangen (45, 46, 47) umfasst, welche permanent am Kasten (18) befestigt sind, und wobei die zweiten Stangen (45, 46, 47) sich von einer ersten Längsseite des Kastens (18) zu einer zweiten Längsseite des Kastens (18) erstrecken, und bei welchem die zweiten Stangen (45, 46, 47) sich von einem ersten hinteren Sicherungselement (54) zu einem zweiten hinteren Sicherungselement erstrecken, und wobei die hinteren Sicherungselemente (54) Sicherungsklammern umfassen, wobei eine erste hintere Sicherungsklammer (54) auf einer ersten Längsseite und eine zweite hintere Sicherungsklammer auf einer zweiten Längsseite montiert ist, und bei welchem die hinteren Sicherungsklammern benachbart zu einem hinteren Ende des Kastens (18) und benachbart zu einem oberen Rand des Kastens (18) montiert sind und wobei die erste hintere Sicherungsklammer benachbart zu einer ersten hinteren Ecke des Kastens (18) und die zweite hintere Sicherungsklammer benachbart zu einer zweiten hinteren Ecke des Kastens (18) montiert ist.

11. Faltbarer Wohnwagen (10) nach einem der vorigen Ansprüche,
bei welchem alle Rahmenelemente (45, 46, 47) des zweiten Rahmens (36) nicht ausziehbar sind.

12. Faltbarer Wohnwagen (10) nach einem der vorigen Ansprüche,
bei welchem die Bewegung des ersten Abdeckungsabschnitts (22) aus der Verstaukonfiguration in die Aufbaukonfiguration die Kabine (30) zieht, was bewirkt, dass der erste Rahmen (34) sich schwenkend in die Aufbaukonfiguration bewegt, und wobei sobald der erste Rahmen (34) sich in der Aufbaukonfiguration befindet, die Bewegung des zweiten Abdeckungsabschnitts (24) aus der Verstaukonfiguration in die Aufbaukonfiguration die Kabine (30) zieht, was bewirkt, dass der zweite Rahmen (36) sich schwenkend in die Aufbaukonfiguration bewegt, und wobei sobald der erste Rahmen (34) und der zweite Rahmen (36) sich beide in der Aufbaukonfiguration befinden, der erste Rahmen (34) in die finale Aufbaukonfiguration erweitert wird, und wobei die Positionierung der Tragstruktur (32) in der Aufbaukonfiguration bewirkt, dass die Kabine (30) gespannt und innerhalb der Tragstruktur (32) gestrafft ist und dass die Kabine (30) sich zwischen dem ersten Rahmen (34) und im zweiten Rahmen (36) spannt, und wobei die Spannung einen gestrafften Deckenabschnitt um einen zentralen Aufnahmebereich herum bereitstellt.

13. Faltbarer Wohnwagen (10) nach einem der vorigen Ansprüche,
bei welchem in der Verstaukonfiguration der zweite Abdeckungsabschnitt (24) daran gehindert wird, in die Aufbaukonfiguration geöffnet zu werden, weil der erste Rahmen (34) und die zugehörige Kabine (30) sich auf dem zweiten Rahmen (36) und der zugehörigen Kabine (30) befinden.

14. Faltbarer Wohnwagen (10) nach einem der vorigen Ansprüche,
bei welchem in der Aufbaukonfiguration sich die Kabine (30) benachbart zu den Rahmenelementen (41, 42, 43, 45, 46, 47) des ersten und des zweiten Rahmens (34, 36) und den benachbarten Rändern des Kastens (18) und den benachbarten Rändern der Abdeckungsabschnitte (22, 24) erstreckt.

15. Verfahren zum Aufbauen eines faltbaren Wohnwagens (10), wobei der faltbare Wohnwagen (10) folgendes umfasst:
einen starren Anhänger mit Rädern (12), umfassend einen Kasten (18) mit einer Längserstreckung, die sich von einem ersten Ende zu einem zweiten Ende hin erstreckt;
wobei der starre Anhänger mit Rädern (12) eine starre Abdeckung umfasst;
eine Kabine (30), die an einer Tragstruktur (32) zur Abstützung der Kabine (30) in einer Aufbaukonfiguration befestigt ist;
wobei die Tragstruktur (32) einen ersten Rahmen (34) und einen zweiten Rahmen (36) umfasst und die starre Abdeckung einen ersten Abdeckungsabschnitt (22) und einen zweiten Abdeckungsabschnitt (24) umfasst und beide Abdeckungsabschnitte (22, 24) schwenkbar mit dem Anhän-ger (12) verbunden sind;
wobei das Verfahren folgendes umfasst:
Öffnen des ersten Abdeckungsabschnitts (22) durch Schwenken, um zu bewirken, dass der erste Rahmen (34) aus einer Verstauposition in eine Aufbauposition rotiert;
Öffnen des zweiten Abdeckungsabschnitts (24) durch Schwenken, um zu bewirken, dass der zweite Rahmen (36) aus einer Verstauposition in die Aufbauposition rotiert;
Erweitern der Höhe des ersten Rahmens (34); und
Befestigen der Kabine (30) um einen Rand herum an Sicherungsmitteln, welche durch den ersten Abdeckungsabschnitt (22), den zweiten
Abdeckungsabschnitt (24) und den Kasten (18) bereitgestellt werden und Beibehalten der Befestigung der Kabine (30) an den Sicherungsmitteln, während der erste Rahmen (34) und der zweite Rahmen (36) aus den Verstaupositionen in die Aufbaupositionen rotieren;
**dadurch gekennzeichnet,**
**dass** der erste Rahmen (34) eine Mehrzahl erster gebogener Stangen (41, 42, 43) umfasst, wobei die ersten gebogenen Stangen (41, 42, 43) so angeordnet sind, dass sie um eine Achse rotieren können, die im Wesentlichen mit der Drehachse des ersten Abdeckungsabschnitts (22) zusammenfällt; und
der zweite Rahmen (36) eine Mehrzahl zweiter gebogener Stangen (45, 46, 47) umfasst, wobei die zweiten gebogenen Stangen (45, 46, 47) so angeordnet sind, dass sie um eine Achse rotieren können, die im Wesentlichen mit der Drehachse des zweiten Abdeckungsabschnitts (24) zusammenfällt.

## Revendications

1. Tente-caravane (10) comprenant :
une remorque rigide à roues (12) comprenant une caisse (18) ayant une longueur longitudinale s'étendant d'une première extrémité à une seconde extrémité ;
la remorque rigide à roues (12) comprenant une couverture rigide ;
un auvent (30) fixé à une structure (32) pour supporter l'auvent (30) dans une configuration assemblée ;
la structure (32) comprenant un premier cadre (34) et un second cadre (36) et la couverture rigide comprenant une première section de couverture (22) et une seconde section de couverture (24), et les deux sections de couverture (22, 24) étant reliées de manière pivotante à la remorque (12) ;
le premier cadre (34) étant relié de manière pivotante à la caisse (18) et l'ouverture pivotante de la première section de couverture (22) amenant le premier cadre (34) à tourner d'une position de rangement à une position assemblée ;
le second cadre (36) étant relié de manière pivotante à la caisse (18) et l'ouverture pivotante de la seconde section de couverture (24) amenant le second cadre (36) à tourner d'une position de rangement à une position assemblée ;
le premier cadre (34) étant ajustable en hauteur et agencé pour être rétracté pour une configuration rangée et étendu pour une configuration assemblée ; et
l'auvent (30) étant fixé autour d'une périphérie à un moyen de fixation fourni par la première section de couverture (22), la seconde section de couverture (24) et la caisse (18), et l'auvent (30) restant fixé au moyen de fixation lorsque le premier cadre (34) et le second cadre (36) tournent des positions de rangement aux positions assemblées ;
**caractérisée par le fait que**
le premier cadre (34) comprend une pluralité de premiers montants en cercle (41, 42, 43), les premiers montants en cercle (41, 42, 43) étant agencés pour tourner autour d'un axe sensiblement concomitant avec un axe de rotation de la première section de couverture (22) ; et
le second cadre (36) comprend une pluralité de seconds montants en cercle (45, 46, 47), les seconds montants en cercle (45, 46, 47) étant agencés pour tourner autour d'un axe sensiblement concomitant avec un axe de rotation de la seconde section de couverture (24).

2. Tente-caravane (10) selon la revendication 1, dans laquelle, dans la configuration assemblée, la hauteur du premier cadre (34) est supérieure à la moitié de la longueur longitudinale de la caisse (18) et, dans la configuration assemblée, la hauteur du second cadre (36) est supérieure à la moitié de la longueur longitudinale de la caisse (18).

3. Tente-caravane (10) selon l'une quelconque des revendications précédentes, dans laquelle, dans la configuration assemblée, la hauteur combinée du premier cadre (34) additionnée à la hauteur du second cadre (36) est supérieure à la longueur de la caisse (18).

4. Tente-caravane (10) selon l'une quelconque des revendications précédentes, dans laquelle l'auvent (30) est fixé sensiblement autour de toute la périphérie inférieure à la première section de couverture (22), à la seconde section de couverture (24) et à la caisse (18), et sensiblement toute la périphérie inférieure de l'auvent (30) reste fixée au moyen de fixation lorsque le premier cadre (34) et le second cadre (36) tournent des positions de rangement aux positions assemblées.

5. Tente-caravane (10) selon l'une quelconque des revendications précédentes, dans laquelle le moyen de fixation comprend un système de fixation à rail d'auvent comprenant un canal allongé (rail) prévu sur la caisse (18) et la première section de couverture (22) et la seconde section de couverture (24), dans lequel des éléments allongés correspondants sont engagés de manière coulissante et retenus à l'intérieur de celui-ci.

6. Tente-caravane (10) selon la revendication 5, dans laquelle les éléments allongés comprennent des tiges souples qui sont retenues autour de la périphérie inférieure de l'auvent (30).

7. Tente-caravane (10) selon l'une quelconque des revendications précédentes, dans laquelle la hauteur du second cadre (36) est non ajustable.

8. Tente-caravane (10) selon l'une quelconque des revendications précédentes, dans laquelle le premier cadre (34) comprend la pluralité de premiers montants (41, 42, 43) qui sont fixés de manière permanente à la caisse (18) et les premiers montants (41, 42, 43) s'étendant d'un premier côté latéral de la caisse (18) à un second côté latéral de la caisse (18), et les premiers montants (41, 42, 43) s'étendant d'un premier élément de fixation avant (50) à un second élément de fixation avant (52), et les éléments de fixation avant (50, 52) comprenant des supports de fixation avec un premier support de fixation avant monté sur un premier côté latéral et un second support de fixation avant monté sur un second côté latéral, et les supports de fixation avant étant montés de manière adjacente à une extrémité avant de la caisse (18) et de manière adjacente à un bord supérieur de la caisse (18), et le premier support de fixation avant étant monté de manière adjacente à un premier coin avant de la caisse (18) et le second support de fixation avant étant monté de manière adjacente à un second coin avant de la caisse (18).

9. Tente-caravane (10) selon l'une quelconque des revendications précédentes, dans laquelle tous les premiers éléments de cadre (41, 42, 43) du premier cadre (34) sont télescopiques.

10. Tente-caravane (10) selon l'une quelconque des revendications précédentes, dans laquelle le second cadre (36) comprend une pluralité de seconds montants (45, 46, 47) qui sont fixés de manière permanente à la caisse (18) et les seconds montants (45, 46, 47) s'étendent d'un premier côté latéral de la caisse (18) à un second côté latéral de la caisse (18), et les seconds montants (45, 46, 47) s'étendant d'un premier élément de fixation arrière (54) à un second élément de fixation arrière, et les éléments de fixation arrière (54) comprenant des supports de fixation avec un premier support de fixation arrière (54) monté sur un premier côté latéral et un second support de fixation arrière monté sur un second côté latéral, et les supports de fixation arrière étant montés de manière adjacente à une extrémité arrière de la caisse (18) et de manière adjacente à un bord supérieur de la caisse (18), et le premier support de fixation arrière étant monté de manière adjacente à un premier coin arrière de la caisse (18) et le second support de fixation arrière étant monté de manière adjacente à un second coin arrière de la caisse (18) .

11. Tente-caravane (10) selon l'une quelconque des revendications précédentes, dans laquelle tous les éléments de cadre (45, 46, 47) du second cadre (36) sont non-extensibles.

12. Tente-caravane (10) selon l'une quelconque des revendications précédentes, dans laquelle le mouvement de la première section de couverture (22) de la configuration rangée à la configuration assemblée tire l'auvent (30) qui amène le premier cadre (34) à se déplacer de manière pivotante à la configuration assemblée et, une fois que le premier cadre (34) est dans la configuration assemblée, le mouvement de la seconde section de couverture (36) de la configuration rangée à la configuration assemblée tire l'auvent (30) qui amène le second cadre (36) à se déplacer de manière pivotante à la configuration assemblée et, une fois que le premier cadre (34) et le second cadre (36) sont tous deux dans la configuration assemblée, le premier cadre (34) est étendu à la configuration assemblée finale, et le positionnement de la structure (32) dans la configuration assemblée amène l'auvent (30) à être en tension et tendu à l'intérieur de la structure (32) et pour que l'auvent (30) s'étende entre le premier cadre (34) et le second cadre (36), et la tension fournit une section de plafond tendue autour d'une zone de réception centrale.

13. Tente-caravane (10) selon l'une quelconque des revendications précédentes, dans laquelle, dans la configuration rangée, la seconde section de couverture (24) est empêchée de s'ouvrir vers la configuration assemblée en raison du premier cadre (34) et de l'auvent associé (30) situés sur le second cadre (36) et l'auvent associé (30).

14. Tente-caravane (10) selon l'une quelconque des revendications précédentes, dans laquelle, dans la configuration assemblée, l'auvent (30) s'étend entre des éléments de cadre adjacents (41, 42, 43, 45, 46, 47) des premier et second cadres (34, 36) et les bords adjacents de la caisse (18) et les bords adjacents des sections de couverture (22, 24).

15. Procédé d'assemblage d'une tente-caravane (10), la tente-caravane (10) comprenant :
une remorque rigide à roues (12) comprenant une caisse (18) ayant une longueur longitudinale s'étendant d'une première extrémité à une seconde extrémité ;
la remorque rigide à roues (12) comprenant une couverture rigide ;
un auvent (30) fixé à une structure (32) pour supporter l'auvent (30) dans une configuration assemblée ;
la structure (32) comprenant un premier cadre (34) et un second cadre (36) et la couverture rigide comprenant une première section de couverture (22) et une seconde section de couverture (24), et les deux sections de couverture (22, 24) étant reliées de manière pivotante à la remorque (12) ;
le procédé comprenant :
ouvrir la première section de couverture (22) de manière pivotante pour amener le premier cadre (34) à tourner d'une position de rangement à une position assemblée ;
ouvrir la seconde section de couverture (24) de manière pivotante pour amener le second cadre (36) à tourner d'une position de rangement à une position assemblée ;
étendre la hauteur du premier cadre (34) dans la position assemblée ; et
fixer l'auvent (30) autour d'une périphérie à un moyen de fixation fourni par la première section de couverture (22), la seconde section de couverture (24) et la caisse (18), et maintenir la fixation de l'auvent (30) au moyen de fixation lorsque le premier cadre (34) et le second cadre (36) tournent des positions de rangement aux positions assemblées ;
**caractérisé par le fait que**
le premier cadre (34) comprend une pluralité de premiers montants en cercle (41, 42, 43), les premiers montants en cercle (41, 42, 43) étant agencés pour tourner autour d'un axe sensiblement concomitant avec un axe de rotation de la première section de couverture (22) ; et
le second cadre (36) comprend une pluralité de seconds montants en cercle (45, 46, 47), les seconds montants en cercle (45, 46, 47) étant agencés pour tourner autour d'un axe sensiblement concomitant avec un axe de rotation de la seconde section de couverture (24).
